(19) Europäisches Patentamt
European Patent Office
Office européen des brevets

(11) Publication number: **0 016 290**
**B1**

(12) **EUROPEAN PATENT SPECIFICATION**

(45) Date of publication of patent specification: **09.06.82**

(51) Int. Cl.³: **B 01 D 53/34** //C01B17/775

(21) Application number: **79302930.7**

(22) Date of filing: **17.12.79**

(54) **Continuous process for the removal of sulphur dioxide from waste gases, and hydrogen and sulphuric acid produced thereby.**

(30) Priority: **23.03.79 GB 7910315**

(43) Date of publication of application:
**01.10.80 Bulletin 80/20**

(45) Publication of the grant of the patent:
**09.06.82 Bulletin 82/23**

(84) Designated Contracting States:
**BE CH DE FR GB IT LU NL**

(56) References cited:
DE - A - 1 955 179
DE - A - 2 350 498
DE - B - 1 234 912
DE - C - 103 644
DE - C - 696 314
GB - A - 1 399 214

GMELINS HANDBUCH DER ANORGANISCHEN CHEMIE, System-Nummer 7, 8. Auflage, 1931, Verlag Chemie GmbH, Wienheim/Berlin, DE., page 7.

(73) Proprietor: **EUROPEAN ATOMIC ENERGY COMMUNITY (EURATOM)**
**Batiment Jean Monnet Plateau du Kirchberg Boîte Postale 1907**
**Luxembourg (LU)**

(72) Inventor: **Van Velzen, Daniel**
**Via Buonarroti**
**Brebbia (IT)**
Inventor: **Langenkamp, Heinrich**
**Via Matteotti**
**Cadrezzate (IT)**
Inventor: **De Beni, Gianfranco**
**Via Montecalvo**
**Cadrezzate (IT)**

(74) Representative: **Baverstock, Michael George Douglas et al,**
**BOULT, WADE & TENNANT 27 Furnival Street**
**London, EC4A 1PQ (GB)**

**EP 0 016 290 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Continuous process for the removal of $SO_2$ from waste gases, and hydrogen and sulphuric acid produced thereby

The invention is concerned with a process for the removal of $SO_2$ from waste gases. It is known that most fossil fuels, such as heavy fuel oil and coal, contain considerable quantities of sulphur. This gives rise to the emission of significant quantities of sulphur dioxide in the combustion product gases.

Sulphur dioxide, however, is a very harmful agent: daily averages above 300 microgram/$m^3$ (0.11 ppm) are already considered hazardous to human health.

Consequently, current standards of protection of the environment call for the removal of the majority of the sulphur dioxide from the combustion waste gases, before those gases are vented into the atmosphere.

The known processes to remove $SO_2$ from waste gases can be classified into two general categories; those processes in which the sulphur is disposed of as waste (throw-away product systems) and processes in which the sulphur product, in the form of, e.g. elemental sulphur or sulphuric acid, is marketed (saleable product processes).

The following commercially-offered throw-away and saleable product systems are considered the most important for near future (about 1985):

Throw-away:

lime scrubbing, limestone scrubbing and double alkali process;

Saleable product:

magnesium oxide scrubbing and sodium sulphate scrubbing (Wellmann-Lord Process).

The drawbacks of the existing processes are mainly of a practical and economical nature:

The throw-away processes produce a very impressive amount of valueless material which must be disposed of. To give an example, a 600 MWe power station using coal containing 2.5% of S produces annually approximately 300 000 tons of sludge.

Disposal of these huge amounts creats a considerable practical and financial problem for the power-producing utilities.

On the other hand, the saleable product processes are expensive, especially with regard to investment costs. Moreover, they generally produce sulphuric acid in a rather dilute form. This fact either requires additional (expensive) concentration procedures or gives rise to difficulties in marketing the product.

The present invention seeks to overcome these drawbacks.

Processes are also known for removing impurities, such as sulphur dioxide, from gas streams using chlorine in the presence of water (see, for example, GB—A—603735, 901630, 1399214, 1474626 and 1496143); but it has not been suggested that there are any advantages in using bromine rather than chlorine as the oxidising agent.

In GB—A—1399214, bromine is mentioned as one of many possible oxidising agents which may be used in the particular apparatus disclosed and claimed in that specification, but again no particular advantage has been suggested for its use in removing sulphur dioxide. Furthermore, the specification teaches the use of a semi-permeable membrane to separate the gas to be purified from the oxidising solution so that no direct contact can take place between the two phases.

In accordance with the present invention there is provided a continuous process for the removal of $SO_2$ from waste gases by the use of an aqueous solution of bromine in which there is electrolytic regeneration of bromine, characterised in that the sulphuric acid and hydrobromic acid produced by contacting the waste gases with the solution are separated, the resulting hydrobromic acid is electrolyzed to produce hydrogen and bromine, and the resulting bromine is recycled to contact the waste gases.

This process is based on the well known reaction:

$$SO_2 + Br_2 + 2H_2O \rightarrow 2HBr + H_2SO_4$$

The above equilibrium is completely shifted towards the right when the applied aqueous solutions are dilute (less than 50 wt% of sulphuric acid), whereas observed reaction rates are very fast. Therefore, when a $SO_2$— containing gas is contacted with an aqueous solution containing bromine, hydrogen bromide and sulphuric acid, the reaction proceeds rapidly and to completion. Even with very small concentrations of sulphur dioxide (0—3000 ppm volume) satisfactory reaction rates and $SO_2$ removal are obtained.

Suitable boundary conditions for the concentrations of the various compounds in the aqueous phase for this reaction are:

Sulphuric acid: between 0 and 50 wt%,
Hydrogen bromide: between 5 and 40 wt%,
Bromine: less than 10 wt%.

The bromine required for the removal of $SO_2$ from waste gases can be regenerated from hydrogen bromide by electrolysis of the latter:

$$2HBr \rightarrow H_2 + Br_2$$

This reaction thus produces hydrogen, which can be considered a very valuable and saleable product.

The electrolysis is carried out by passing the solution used for the $SO_2$-removal reaction through an electrolytic cell, where low voltages (probably below 1 Volt) can be applied to obtain the required reaction. Hydrogen is formed in the gaseous phase and can easily be purified from

traces of bromine, whereas practically all the formed bromine remains dissolved in the circulating liquid.

The process is finally completed with the concentration of sulphuric acid and the removal of HBr from the aqueous solution. This necessary step can advantageously be performed by contacting the incoming waste gas (which usually has a temperature of 150 to 200°C) with a small side-stream of the aqueous solution coming from the $SO_2$ removal reactor. Here the HBr present is completely evaporated from the solution together with a large part of the water from the solution. In this way it is possible to produce a concentrated sulphuric acid product.

It is particularly interesting that in this operation no additional heat is necessary: the contact tower can operate fully adiabatically.

A block diagram of the proposed process is given in the accompanying drawing. This is an example of a small pilot plant, treating 2150 cubic meters per hour of a typical combustion gas coming from a fuel oil or coal burning furnace.

This can be considered a typical example of a possible application which may serve for further elucidation of the process principles.

The incoming waste gas 1 contains 4.0 g/m$^3$ S.T.P. (S.T.P. means Standard Temperature and Pressure, i.e. room temperature and atmospheric pressure.) of sulphur dioxide (1500 ppm volume). It has a dew point of 41°C, corresponding with a water content of 59 g/m$^3$ S.T.P. and enters the process at a temperature of 185°C.

This gas stream enters the adiabatic evaporator 2. To this reactor is also fed a solution 3, containing 25 wt% sulphuric acid and 20 wt% hydrobromic acid in water. This solution comes from the $SO_2$-removal reactor at a flow rate of 47.4 kg/h.

The two streams 2 and 3 are intensively mixed in a suitable type of apparatus, such as a spray column or a concurrent downflow contactor with liquid recycle, for instance.

During this operation, all of the HBr passes into the vapour phase together with a large part of the water from the incoming solution 3. The final liquid product 4 is a solution of sulphuric acid in water, containing 85 wt% $H_2SO_4$ which is a valuable and saleable product. 13.9 kg/hr of the product are obtained.

During the operation the temperature of the gas stream drops to 155°C and the exit gas 5 contains now, besides the original sulphur dioxide, also 4.4 g/m$^3$ of HBr. Its water content has increased to 70 g/m$^3$ S.T.P., a dew point of 44.5°C.

This gas stream now passes to the $SO_2$-removal reactor 6 which may be a downward flow, concurrently-operated, packed column 1 meter in diameter and 3 meters in height.

In this unit, the gas stream 5 is contacted with a solution 7 coming from the electrolytic cell 8 containing 2 wt% of bromine.

The HBr present in the gas phase is dissolved in the liquid, whereas the sulphur dioxide reacts with bromine and water to form HBr and $H_2SO_4$. Both these products remain quantitatively in the liquid phase.

The product gas 9, then, is essentially free from HBr, since the partial pressure of hydrogen bromide in the gas phase in equilibrium with the liquid phase composition is of the order of $10^{-4}$ mm Hg. 2150 m$^3$/h of product gas is produced with an $SO_2$ content of 0.3 g/m$^3$ at 50°C. Thus 93% of the $SO_2$ in the waste gas has been removed.

The incomplete removal of the sulphur dioxide is due to the fact that the bromine generated by the electrolytic cell 8 is intentionally kept in stoichiometric deficiency with respect to the $SO_2$ entering with the gas phase. This is done to avoid possible bromine losses.

Obviously, the $SO_2$— removal efficiency can further be raised by increasing the amount of bromine produced by the electrolytic cell.

The temperature of the $SO_2$— removal reactor must be controlled in such a way that the leaving gas 9 has a humidity of 57 g/m$^3$ S.T.P. water vapour content. By doing so, the water needed for the reaction is taken from the humidity of the incoming flue gases and no additional water supply is necessary.

The required reaction temperature will be between 45 and 50°C.

The bulk of the liquid phase 10 leaving the reactor 6 is passed to the electrolytic cell 8. The flow rate into the cell is 1000 kg/h. Here a part of the HBr is converted into hydrogen and bromine, producing a solution containing 18 wt% of hydrogen bromide and 2 wt% of bromide.

A small stream 3 (47.4 kg/h) of liquid goes to the evaporator 2, removing the formed sulphuric acid from the reactor and transporting it to the final product 4.

The electrolytic cell 8 may vary well consist of graphite electrodes; the total surface being about 3 m$^2$. A basic cell voltage of approximately 1 Volt is applied between the electrodes, causing a current flow of approximately 7.5 kA. The energy efficiency in such a cell will be about 90%; giving rise to a total hydrogen production rate of 3.0 m$^3$/h at S.T.P. Bromine is produced at a rate of 20 kg/h.

The invention offers several advantages when compared to the current processes. It does not produce the huge amounts of valueless, disposable products, as are produced in the current throw-away processes, such as lime and limestone scrubbing.

The sulphuric acid produced is of high concentration and is directly produced in one single reaction step. No additional thermal regeneration steps are required, as proves to be necessary in the Wellmann-Lord and magnesium oxide processes.

The internal regeneration of bromine by HBr electrolysis produces a considerable stream of pure hydrogen, which is a very valuable bye-product of the process.

No solid materials or slurries are required as reactants.

Reaction rates are high and will probably only be diffusion controlled, so that reactors of relatively small dimensions can be utilized.

**Claims**

1. A continuous process for the removal of $SO_2$ from waste gases by the use of an aqueous solution of bromine in which there is electrolytic regeneration of bromine, characterised in that the sulphuric acid and hydrobromic acid produced by contacting the waste gases with the solution are separated, the resulting hydrobromic acid is electrolyzed to produce hydrogen and bromine, and the resulting bromine is recycled to contact the waste gases.

2. A process as claimed in claim 1 wherein the contacting stream contains:—
Sulphuric acid: between 0 and 50 wt%,
Hydrogen bromide: between 5 and 40 wt%,
Bromine: less than 10 wt%.

3. A process as claimed in claim 1 or claim 2 wherein the separation step is carried out by evaporation using the waste gases, when hot, to heat the aqueous solution after contacting the waste gases.

4. Hydrogen when produced in accordance with a process as claimed in any one of the preceding claims.

5. Sulphuric acid when produced in accordance with a process as claimed in any one of claims 1 to 3.

**Revendications**

1. Procédé continu pour l'élimination du $SO_2$ de gaz résiduaires par emploi d'une solution aqueuse de brome dans lequel on effectue une régénération électrolytique du brome, caractérisé en ce que l'on sépare l'acide sulfurique et l'acide bromhydrique produits par contact des gaz résiduaires avec la solution, un électrolyse l'acide bromhydrique obtenu pour produire de l'hydrogène et du brome et on recycle le brome obtenu pour le mettre en contact avec les gaz résiduaires.

2. Procédé selon la revendication 1, caractérisé en ce que le courant mis en contact contient:
acide sulfurique: entre 0 et 50% en poids,
acide bromhydrique: entre 5 et 40% en poids,
brome: moins de 10% en poids.

3. Procédé selon l'une des revendications 1 ou 2, caractérisé en ce que l'on effectue le stade de séparation par évaporation en utilisant les gaz résiduaires, lorsqu'ils sont chauds, pour chauffer la solution aqueuse après la mise en contact des gaz résiduaires.

4. Hydrogène, caractérisé en ce qu'on l'a produit selon un procédé selon l'une quelconque des revendications précédentes.

5. Acide sulfurique, caractérisé en ce qu'on l'a produit selon le procédé de l'une quelconque des revendications 1 à 3.

**Patentansprüche**

1. Kontinuierliches Verfahren zum Entfernen von $SO_2$ aus Abgasen durch Anwendung einer wäßrigen Bromlösung, bei dem man das Brom elektrolytisch wiedergewinnt, dadurch gekennzeichnet, daß man Schwefelsäure und Bromwasserstoffsäure, die gebildet werden, abtrennt, daß man die erhaltene Bromwasserstoffsäure zu Wasserstoff und Brom elektrolysiert und daß man das erhaltene Brom wieder in den Kreislauf zurückführt, indem man es mit den Abgasen in Kontakt bringt.

2. Verfahren nach Anspruch 1, dadurch gekennzeichnet, daß die Kontaktströme weniger als 50 Gew.-% Schwefelsäure, zwischen 5 und 40 Gew.-% Bromwasserstoff und weniger als 10 Gew.-% Brom enthalten.

3. Verfahren nach Anspruch 1 oder 2, dadurch gekennzeichnet, daß man die Abtrennung durch Eindampfen in der Weise durchführt, daß man die wäßrige Lösung nach Zusammenbringen mit den Abgasen durch die heißen Abgase erhitzt.

4. Wasserstoff, erzeugt gemäß einem Verfahren nach einem der vorsthenden Patentansprüche.

5. Schwefelsäure, erzeugt gemäß einem Verfahren nach einem der Ansprüche 1 bis 3.

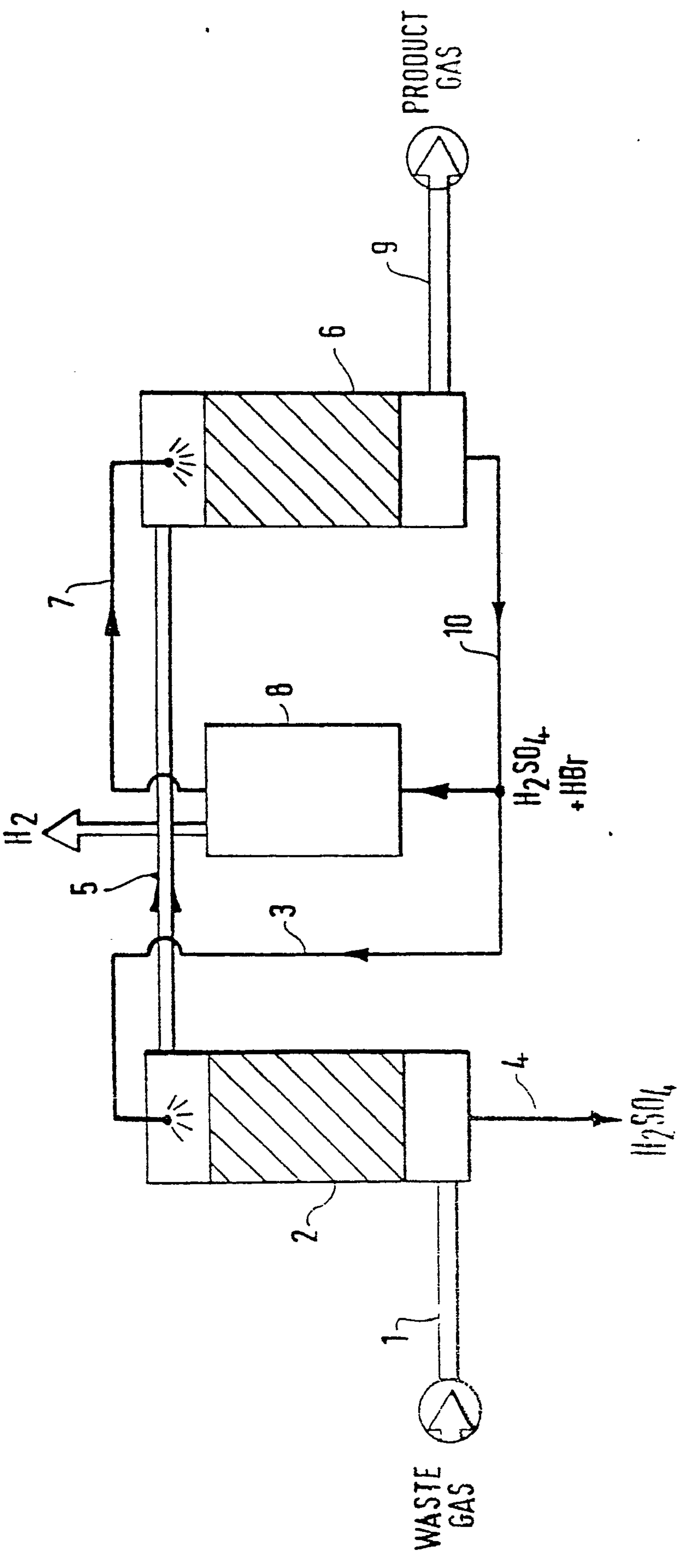
PRODUCT GAS
9
6
7
10
8
H2
H2SO4 +HBr
5
3
4
H2SO4
2
1
WASTE GAS